(19) Europäisches Patentamt
European Patent Office
Office européen des brevets

(11) **EP 3 940 217 B1**

(12) **EUROPÄISCHE PATENTSCHRIFT**

(45) Veröffentlichungstag und Bekanntmachung des Hinweises auf die Patenterteilung:
**25.02.2026 Patentblatt 2026/09**

(21) Anmeldenummer: **21184196.0**

(22) Anmeldetag: **07.07.2021**

(51) Internationale Patentklassifikation (IPC):
*F02D 23/00* (2006.01)   *F02D 11/10* (2006.01)
*F02D 41/14* (2006.01)

(52) Gemeinsame Patentklassifikation (CPC):
**F02D 41/1401; F02D 11/105; F02D 41/0002;**
F02D 2041/1433; F02D 2200/0402;
F02D 2200/0406; F02D 2200/0408; Y02T 10/12;
Y02T 10/40

(54) **VERFAHREN ZUM EINSTELLEN EINER DROSSELKLAPPE, MOTORSTEUERGERÄT UND EIN FAHRZEUG**

METHOD FOR ADJUSTING A THROTTLE VALVE, ENGINE CONTROL DEVICE AND VEHICLE

PROCÉDÉ DE RÉGLAGE D'UN PAPILLON, APPAREIL DE COMMANDE DE MOTEUR ET VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.07.2020 DE 102020208865**

(43) Veröffentlichungstag der Anmeldung:
**19.01.2022 Patentblatt 2022/03**

(73) Patentinhaber: **VOLKSWAGEN AG**
**38440 Wolfsburg (DE)**

(72) Erfinder:
• **Garwon, Maiko**
**38116 Braunschweig (DE)**
• **Bass, Kostyantyn**
**34246 Vellmar (DE)**

(56) Entgegenhaltungen:
EP-A1- 3 543 514        DE-A1- 102007 060 216
DE-A1- 102018 120 975   US-A1- 2002 055 814

• GUILLAUME COLIN ET AL: "Neural Control of Fast Nonlinear Systems- Application to a Turbocharged SI Engine With VCT", IEEE TRANSACTIONS ON NEURAL NETWORKS, IEEE SERVICE CENTER, PISCATAWAY, NJ, US, vol. 18, no. 4, 1 July 2007 (2007-07-01), pages 1101 - 1114, XP011186874, ISSN: 1045-9227, DOI: 10.1109/ TNN.2007.899221
• HILSCH MICHAEL ET AL: "Internal Model Control of Nonlinear Systems with Input Saturation", AUTOMATISIERUNGSTECHNIK - AT., vol. 59, no. 6, 1 June 2011 (2011-06-01), DE, pages 354 - 363, XP055858474, ISSN: 0178-2312, DOI: 10.1524/ auto.2011.0926

**Beschreibung**

Die Erfindung betrifft eine Regelung des Saugrohrdruckes nahe Druckausgleich an der Drosselklappe.

Verbrennungsmotoren wandeln chemische Energie in mechanische Energie um. Zu diesem Zweck wird ein entzündbares Gemisch aus Kraftstoff und Luft in eine Brennkammer eingebracht und dort gezündet. Das vom Verbrennungsmotor abgegebene Drehmoment wird durch Drosseln der Luftmenge des Gemisches mit einer Drosselklappe eingestellt. Eine Drosselklappe ist die Komponente des Verbrennungsmotors, mit der das durch die Drosselung der Fördermenge erzeugte Drehmoment eingestellt wird (Mengensteuerung). Sie befindet sich im Ansaugtrakt zwischen dem Luftfilter und dem Ansaugkrümmer bzw. dem fächerförmig verzweigenden Saugrohr des Motors. Die Drosselklappe wird durch Drücken des Gaspedals geöffnet. Die Öffnung der Drosselklappe hängt nicht unbedingt direkt von der Stellung des Pedals ab. Insbesondere die elektronische Übertragung der Gaspedalstellung auf die Drosselklappe ermöglicht über ein Steuergerät einen aktiven Eingriff in die Klappenöffnung. Dabei werden sowohl die Geschwindigkeit der Öffnung als auch die Stellung der Klappe in Abhängigkeit von der Pedalstellung beeinflusst. Ziel dabei ist es, die Fahrbarkeit von leistungsstarken Motoren zu verbessern oder den Fahrkomfort für die Insassen zu erhöhen. Außerdem werden Assistenzsysteme wie Tempomat oder Traktionskontrolle ermöglicht.

US 7,805,939 B2 betrifft ein Drehmomentbasis-Steuergerät. Das Drehmomentbasis-Steuergerät berechnet das Solldrehmoment basierend auf einer Gaspedalposition und einer Motordrehzahl. Das Drehmomentbasis-Steuergerät führt ferner eine Berechnung der Soll-Luftstromrate, eine Berechnung des Soll-Einlassdrucks und eine Berechnung des Soll-Ladedrucks basierend auf dem Soll-Drehmoment durch. Die Soll-Drosselklappenposition wird basierend auf der Soll-Luftstromrate, dem Soll-Ansaugdruck, dem Soll-Ladedruck, dem tatsächlichen Ladedruck und der Drosselklappen-Ansaugtemperatur berechnet. Eine Hilfssteuereinheit berechnet die Zielturbinenleistung basierend auf der Soll-Luftstromrate und dem Soll-Ladedruck, die von dem Drehmomentbasis-Steuergerät berechnet werden, und berechnet die tatsächliche Turbinenleistung basierend auf Abgasinformationen. Die Unterstützungsleistung eines an einem Turbolader angebrachten Motors wird basierend auf der Leistungsdifferenz zwischen der Soll-Turbinenleistung und der tatsächlichen Turbinenleistung berechnet.

US 9,567,924 B2 offenbart ein Steuergerät, das durch eine Überwachungseinrichtung bestätigt, dass ein Soll-Drosselöffnungsgrad einer elektronisch gesteuerten Drossel mit einem Referenz-Drosselöffnungsgrad als Referenz zu abzugleichen ist. Eine erste Recheneinheit führt die Berechnung des Soll-Drosselklappenöffnungsgrades durch. Die erste Recheneinheit berechnet einen Soll-Drosselklappenöffnungsgrad auf der Grundlage einer Soll-Ansaugluftmenge und eines gemessenen Wertes oder eines geschätzten Wertes eines Ladedrucks, indem sie ein inverses Modell eines Luftmodells verwendet, das eine dynamische Beziehung ausdrückt, die zwischen dem Ladedruck, einem Drosselklappenöffnungsgrad und einer Ansaugluftmenge hergestellt wird. Eine zweite Recheneinheit berechnet einen Referenz-Drosselklappenöffnungsgrad auf der Grundlage der Soll-Ansaugluftmenge und einem gemessenen Wert oder einem geschätzten Wert eines atmosphärischen Drucks in einem stationären Zustand. und verwendet dafür eine Zusammenhang, der zwischen der Ansaugluftdurchflussrate und einem Ansaugkrümmerdruck in einem stationären Zustand besteht, und einen Zusammenhang, der zwischen einem Drosselklappen-Vordruck, dem Ansaugkrümmerdruck und einer Drosselklappen-Durchflussrate in einem stationären Zustand besteht.

US 9,797,299 B2 offenbart einen aufgeladenen Verbrennungsmotor. Der aufgeladene Verbrennungsmotor verfügt über einen Kompressor, der so betrieben werden kann, dass er gemäß den Betriebsanforderungen des Motors selektiv eine Luftmasse liefert. Der Luftdruck kann dabei einen Bereich von unter bis über den atmosphärischen Luftdruck umfassen. Der Kompressor verfügt über einen Schlitten in Kombination mit einer Drosselklappe, die die Luftmasse steuert, die zu einer Luftmassen-Bypassöffnung gelenkt und dem Verbrennungsmotor zugeführt wird. Der Schlitten hat Rollen, die auf Schienen laufen, die es dem Schlitten ermöglichen, die Luftmassen-Bypassöffnung zur Verbindung mit einem Gehäuse zu öffnen und zu schließen, das eine atmosphärischer Luftmenge und eine Bypass-Luftmenge, die mit der atmosphärischen Luftmenge vermischt wist, zu einem Luftmasseneinlass des Laders leitet. Weiterer relevanter Stand der Technik findet sich in GUILLAUME COLIN ET AL: "Neural Control of Fast Nonlinear Systems- Application to a Turbocharged SI Engine With VCT", HILSCH MICHAEL ET AL: "Internal Model Control of Nonlinear Systems with Input Saturation", DE 10 2018 120975 A1 und DE 10 2007 060216 A1.

Die Aufgabe der vorliegenden Erfindung ist es, eine stationär genauere Regelung des Saugrohrdrucks (und damit auch der Frischluftfüllung im Zylinder) mit der Drosselklappe bereitzustellen.

Diese Aufgabe wird durch das Verfahren nach Anspruch 1, das Motorsteuergerät nach Anspruch 12 und das Fahrzeug nach Anspruch 13 gelöst. Weitere vorteilhafte Ausgestaltungen der Erfindung ergeben sich aus den Unteransprüchen und der folgenden Beschreibung bevorzugter Ausführungsbeispiele der vorliegenden Erfindung.

Ein erster Aspekt der vorliegenden Erfindung betrifft ein Verfahren zum Einstellen einer Drosselklappe, umfassend: Regeln einer Drosselklappenstellung der Drosselklappe im gesamten Betriebsbereich eines Verbrennungsmotors, wobei das Regeln auf einem Internen Modellkontrollen-Prinzip basiert.

Der Verbrennungsmotor kann ein Ottomotor sein. Ein Ottomotor ist ein Verbrennungsmotor mit Fremdzündung. Dabei wird ein Luft-Kraftstoff-Gemisch verbrannt und damit die im Kraftstoff gebundene chemische Energie freigesetzt und in mechanische Energie umgewandelt.

Die Regelung des Saugrohrdruckes im Bereich des Druckausgleichs - etwa gleicher Druck vor und nach der Drosselklappe - an der Drosselklappe ("Drosselklappenüberweg") ist mit einigen Schwierigkeiten verbunden. So reagiert beispielsweise im Bereich des Druckausgleichs der Saugrohrdruck (Druck stromab der Drosselklappe - nach der Drosselklappe) zunehmend unempfindlich auf Drosselklappenbewegungen, was zur Folge hat, dass mit zunehmenden Öffnungswinkel der Drosselklappe die sich daraus ergebenden Druckänderungen im Saugrohr und die damit einhergehenden Änderungen im Massenfluss durch die Drosselklappe ebenfalls immer kleiner werden.

Zur Wahrung der Regelkreisdynamik kann die Verstärkung des Saugrohrdruckreglers zunehmend angehoben werden, was allerdings auch dazu führen kann, dass hochfrequentes Messrauschen (z.B. Pulsationen auf dem gemessenen Saugrohrdruck) mitverstärkt werden kann und dadurch auch höherfrequente Pulsationen im Sollwert der Drosselklappenstellung (Stellgröße des Saugrohrdruckreglers) entstehen können. Solche Pulsationen können sich nachteilig auf die Lebensdauer des Bauteils der Drosselklappe auswirken. Somit kann es vorkommen, dass die Reglerverstärkung nicht wie erforderlich erhöht wird. Folglich können Einbußen in der Regelkreisdynamik und somit auch im Fahrverhalten sowie im Störübertragungsverhalten (bspw. das Ausregeln von Störungen infolge des Einleitens eines zusätzlichen aus der Tankentlüftung stammenden Massenstroms ins Saugrohr) auftreten.

In einer aktuellen technischen Umsetzung ist aus diesem Grund im Bereich des Druckausgleichs an der Drosselklappe ein reines Steuerungskonzept (und keine Regelung) zum Einstellen eines gewünschten Saugrohrdruckes umgesetzt worden. Das bedeutet, dass sobald das Verhältnis aus dem Druck stromauf vor der Drosselklappe (Saugrohrdruck) und dem Druck stromab nach der Drosselklappe (Ladedruck) einen vorgegebenen Grenzwert überschreitet, die Saugrohrdruckregelung deaktiviert wird und die Steuerung zum Einstellen eines gewünschten Saugrohrdruckes aktiviert wird. Der dafür erforderliche Öffnungswinkel der Drosselklappe wird in diesem Bereich in Abhängigkeit vom Sollmassenstrom und Sollsaugrohrdruck direkt vorgesteuert.

Prinzipiell kann es bei einer reinen Steuerung der Drosselklappenstellung ohne Rückkopplung im Bereich des Drosselklappenüberwegs unter Umständen dazu kommen, dass bedingt durch Fertigungstoleranzen oder Alterungseffekten in diesem Betriebsbereich die stationäre Genauigkeit zwischen dem vorgegebenen Sollsaugrohrdruck und dem gemessenen Saugrohrdruck nicht mehr gewährleistet werden kann. Der durch die Drosselklappe eingestellte Druck im Saugrohr passt somit nicht zur geforderten Frischluftfüllung im Zylinder. Das kann auch dazu führen, dass zu viel Frischluft im Zylinder eingeschlossen wird, sodass durch die sog. Momentenstruktur im Motorsteuergerät folglich der Zündwinkel freigegeben wird. Dies verursacht einen erhöhten Kraftstoffverbrauch, da in diesem Betriebspunkt zu viel Frischluft im Zylinder eingeschlossen ist und für den Lambda=1 Betrieb entsprechend mehr Kraftstoff eingespritzt werden muss. Das "überschüssige" Drehmoment des Zylinders wird automatisch durch den freigegebenen Zündwinkeleingriff (Spätverstellung des Zündwinkels) in Wärme und nicht in Bewegungsenergie umgewandelt.

Ein weiterer Nachteil der reinen Steuerung besteht darin, dass die im Motorsteuergerät ablaufenden Diagnosen zur Erkennung eines fehlerhaften Saugrohrdruck- und Ladedrucksensors in ihrer Erkennungsgüte negativ beeinträchtigt werden können, sobald sich einer der genannten Sensoren nicht mehr entsprechend seiner Spezifikation verhält. In so einem Fall wird das aktuell im Motorsteuergerät umgesetzte reine Steuerungskonzept verwendet, die Solldrosselklappenpositionen zu berechnen, die zu größeren Stationärabweichungen zwischen Sollfrischluft- und Ist-Frischluftfüllung führen. Neben den dadurch bedingten Zündwinkeleingriffen kann es auch zu einem zyklischen Wechsel zwischen Aktivierung der Saugrohrdruckregelung und Aktivierung des reinen Steuerungsprinzips (und damit einhergehend Deaktivierung des Saugrohrdruckreglers) kommen. Durch diese Umschaltungen treten bei von ihrer Spezifikation abweichenden Drucksensoren stärkere Änderungen in der Drosselklappenöffnung auf, die sich wiederum negativ auf die Erkennungsgüte der Sensordiagnosen auswirken können. Dies führt dazu, dass ein fehlerhafter Drucksensor möglicherweise nicht rechtzeitig erkannt wird.

Bei der Verwendung einer Regelung des Saugrohrdrucks im Bereich des Druckausgleichs an der Drosselklappe kann eine stationäre Genauigkeit des Saugrohrdrucks bzw. der Frischluftfüllung erhöht werden. Ferner können Zündwinkeleingriffe vermieden werden, die bei zu viel Frischluftfüllung und damit zu viel Drehmoment erforderlich sind (Füllungsüberschwinger). Des Weiteren kann ein Toggeln zwischen der Regelung des Saugrohrdrucks (bei größeren Druckdifferenzen an der Drosselklappe) und der Steuerung des Saugrohrdrucks (nahe Druckausgleich an der Drosselklappe) vermieden werden, trotz fehlerbehaftetem Saugrohrdrucksensor.

Das Verfahren kann sich auch auf einen Verbrennungsmotor mit Aufladung beziehen. Für die Umsetzung des Verfahrens können ein Modell der Frischluftfüllung im Zylinder und ein Drucksensor im Saugrohr verwendet werden.

Das Verfahren kann die kontinuierliche Regelung der Drosselklappenstellung im gesamten Betriebsbereich des Verbrennungsmotors umfassen. Der Einsatzbereich erstreckt sich vom Saugbereich, über den Überwegbereich bis zum aufgeladenen Betriebsbereich des Verbrennungsmotors. Das Verfahren ermöglicht, die Stellung der Drosselklappe auch im Bereich des Druckausgleichs über die Drosselklappe ("Drosselklappenüberweg") geregelt zu betreiben. Vor allem ergibt sich hierdurch die Möglichkeit, auch in diesem Betriebsbereich den Saugrohrdruck stationär genau einzustellen. Durch die stationäre Genauigkeit des Saugrohrdrucks ist auch gewährleistet, dass die geforderte Sollfrischluftfüllung im Zylinder eingestellt wird.

Das Verfahren kann auch in diesem Bereich die Saugrohrdruckregelung über eine verstellbare Turbinengeometrie (VTG) unterstützen. Vor allem in Phasen des Lastabbaus kann die entwickelte Methode die Stellung der Drosselklappe verbessern und somit das "Nachschieben" verhindern.

Das Interne Modellkontrolle- Prinzip (*Internal Model Control,* kurz IMC), ist ein Regelungsverfahren aus der Regelungstechnik, das die implizite Grundlage aller Prädiktivregler ist. Regler nach dem IMC-Prinzip enthalten ein möglichst realitätsidentisches mathematisches Modell des Prozesses und ein Kompensationsglied.

In manchen Ausführungsformen kann der gesamte Betriebsbereich des Verbrennungsmotors einen Ansaugbereich, einen Überwegbereich (Druckausgleichs) und einen aufgeladenen Betriebsbereich des Verbrennungsmotors umfassen.

Die Regelung einer Drosselklappenstellung der Drosselklappe im Bereich des Drosselklappenüberwegs ist vorteilhaft, da aufgrund von Fertigungstoleranzen oder Alterungseffekten in diesem Arbeitsbereich die stationäre Genauigkeit zwischen dem vorgegebenen Sollsaugrohrdruck und dem gemessenen Saugrohrdruck gewährleistet werden kann. Der durch die Drosselklappe eingestellte Druck im Saugrohr entspricht somit auch der erforderlichen Frischluftfüllung im Zylinder.

Erfindungsgemäß empfängt das Regeln einen Sollsaugrohrdruck als Eingangsgröße und berechnet eine Sollfläche der Drosselklappe basierend auf dem Sollsaugrohrdruck

In manchen Ausführungsformen kann die Sollfläche der Drosselklappe gemäß dem IMC-Prinzip gleichzeitig einem Prozess und einem Prozessmodell zur Verfügung gestellt werden.

Die gleichzeitige Verfügung der Sollfläche der Drosselklappe gemäß dem IMC-Prinzip ist vorteilhaft, da die Regelung der Drosselklappenstellung der Drosselklappe robuster gegenüber Störungen und Modellfehlanpassungen werden kann.

In manchen Ausführungsformen kann die berechnete Sollfläche eine durch physikalische Stellergrenzen limitierte Sollfläche sein.

Die physikalische Stellergrenze ist dabei die physikalische Bauteilgrenze der Drosselklappe. Die Limitierung der berechneten Sollfläche ist vorteilhaft, da eine realistischere Sollfläche für die Regelung der Drosselklappenstellung der Drosselklappe bereitgestellt werden kann.

In manchen Ausführungsformen kann der Prozess die Stellung der Drosselklappe basierend auf der berechneten Sollfläche bestimmen und den dadurch erzeugten Saugrohrdruck messen, und das Prozessmodell kann einen modellierten Saugrohrdruck basierend auf der berechneten Sollfläche bestimmen.

In manchen Ausführungsformen kann das Regeln eine Differenz des gemessenen Saugrohrdrucks und des modellierten Saugrohrdrucks ermitteln und einen korrigierten Sollsaugrohrdruck basierend auf der ermittelten Differenz ermitteln.

In manchen Ausführungsformen kann die Sollfläche der Drosselklappe wie folgt berechnet werden:

$$A_{DK,soll} = \frac{\frac{V}{KRT_2}\dot{p}_{SPcor,f} + w_{vlv}(p) - w_{TEV}}{p_1\sqrt{\frac{2}{RT_1}}\Psi(p)} - A_{DK,leak} \qquad \text{(Gl. 1)}$$

wobei gilt: *V* ist das Volumen des Saugrohres, *R* ist die spezifische Gaskonstante von Luft, *K* ist der Isentropenexponent, *p* ist der Luftdruck im Saugrohr, $T_2$ ist die Temperatur der Luft im Saugrohr, $w_{vlv}(p)$ ist der abfließende Luftmassenstrom in Abhängigkeit des Luftdrucks *p*, der über die Einlassventile aus dem Saugrohr ausströmt, $w_{TEV}$ ist der zufließende Luftmassenstrom, der über das Tankentlüftungsventil ins Saugrohr einströmt, $p_1$ ist der Luftdruck, der stromauf der Drosselklappe anliegt, $T_1$ ist die Temperatur der Luft, die über die Drosselklappe ins Saugrohr einströmt, $\Psi(p)$ ist die Durchflussfunktion in Abhängigkeit des Luftdrucks *p* und $A_{DK,leak}$ ist die effektive Leckage-Fläche der Drosselklappe.

In manchen Ausführungsformen kann der modellierte Saugrohrdruck wie folgt berechnet werden:

$$\hat{p} = \int(\dot{\hat{p}})dt \qquad \text{(Gl. 2),}$$

wobei

$$\frac{V}{KRT_2}(\dot{\hat{p}}) = \sum W_G = W_{thr} - W_{vlv} + W_{TEV}$$

$$= p_1\sqrt{\frac{2}{RT_1}}\left(A_{DK,lim} + A_{DK,leak}\right)\Psi(p) - w_{vlv}(p) + w_{TEV} \qquad \text{(Gl. 3)}$$

ist,

und wobei gilt: $W_G$ ist der Luftmassenstrom im Saugrohr, $Wt_{hr}$ ist der zufließende Luftmassenstrom, der über die Drosselklappe ins Saugrohr einströmt, $p_1$ ist der Luftdruck stromauf der Drosselklappe (Ladedruck), $V$ ist das Volumen des Saugrohres, $R$ ist die spezifische Gaskonstante von Luft, $K$ ist der Isentropenexponent, $p$ ist der Luftdruck im Saugrohr, $T_2$ ist die Temperatur der Luft im Saugrohr, $w_{vlv}(p)$ ist der abfließende Luftmassenstrom in Abhängigkeit des Luftdrucks $p$, der über die Einlassventile aus dem Saugrohr ausströmt, $w_{TEV}$ ist der zufließende Luftmassenstrom, der über das Tankentlüftungsventil ins Saugrohr einströmt, $T_1$ ist die Temperatur der Luft, die über die Drosselklappe ins Saugrohr einströmt, $\Psi(p)$ ist die Durchflussfunktion in Abhängigkeit des Luftdrucks $p$ und $A_{DK,leak}$ ist die effektive Leckage-Fläche der Drosselklappe.

Erfindungsgemäß filtert das Regeln ferner den Sollsaugrohrdruck mittels eines Filters.

Der Filter kann beispielsweise ein PT1-Glied sein. Ein PT1-Glied, auch als Verzögerungsglied erster Ordnung bezeichnet, wird in der Regelungstechnik zur Beschreibung von Systemen mit Verzögerungsverhalten verwendet. Durch das Filtern kann der Sollsaugrohrdruck beruhigt werden.

In manchen Ausführungsformen kann das Regeln ferner die Sollfläche der Drosselklappe mittels eines Filters filtern.

Der Filter kann beispielsweise ein $PT_1$-Glied sein. Die Filterung kann die Sollfläche der Drosselklappe stabilisieren und beruhigen.

In manchen Ausführungsformen kann das Regeln ferner die Differenz des gemessenen Saugrohrdrucks und des modellierten Saugrohrdrucks mittels eines Filters filtern.

Der Filter kann beispielsweise ein $PT_1$-Glied sein. Durch Filtern dieser Differenz können Messrauschen unterdrückt werden.

In manchen Ausführungsformen kann das Regeln der Drosselklappenstellung der Drosselklappe im aufgeladenen Betriebsbereich des Verbrennungsmotors durch eine verstellbare Turbinengeometrie (VTG) unterstützt werden.

Beispielsweise kann der Saugrohrdruck im aufgeladenen Betriebsbereich durch einen Verdichter eines Abgasturboladers erhöht/gesenkt werden, falls die Differenz zwischen dem geforderten Saugrohrdruck (= Sollsaugrohrdruck) und dem gemessenen Saugrohrdruck (zu) groß / (zu) klein ist.

Ein zweiter Aspekt betrifft ein Motorsteuergerät, welches dazu eingerichtet ist, ein Verfahren nach einem der vorhergehenden Ausführungsformen durchzuführen.

Ein dritter Aspekt betrifft ein Fahrzeug mit dem vorhergehenden Motorsteuergerät.

Ausführungsbeispiele der Erfindung werden nun beispielhaft und unter Bezugnahme auf die beigefügte Zeichnung beschrieben:

Fig. 1    zeigt ein Blockdiagramm, das schematisch die Konfiguration eines Fahrzeugs gemäß einem Ausführungsbeispiel der vorliegenden Erfindung darstellt;

Fig. 2    zeigt ein Blockdiagramm, das schematisch die Konfiguration eines 4-Zylinder-Verbrennungsmotors eines Fahrzeugs gemäß einem Ausführungsbeispiel der vorliegenden Erfindung darstellt;

Fig. 3    zeigt als ein Ausführungsbeispiel ein Regelungssystem für die Regelung der Drosselklappenstellung im Saug-, Überweg- und Ladebereich des Verbrennungsmotors;

Fig. 4    zeigt als ein Ausführungsbeispiel einen Verfahrensansatz der modellbasierten Vorsteuerung des Regelungssystems; und

Fig. 5    zeigt als ein Ausführungsbeispiel einen Verfahrensansatz des Prozessmodells des Regelungssystems.

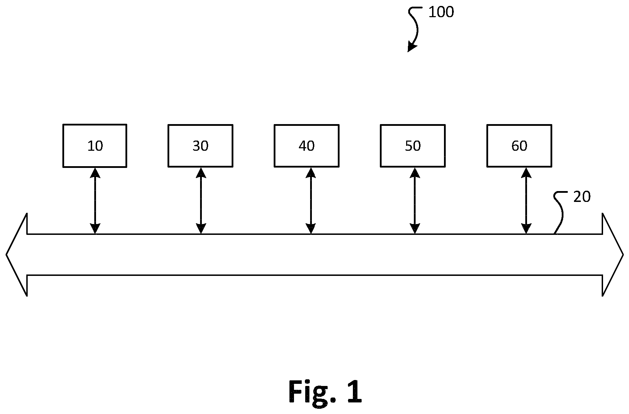

Fig. 1 zeigt ein Blockdiagramm, das schematisch die Konfiguration eines Fahrzeugs gemäß einem Ausführungsbeispiel der vorliegenden Erfindung darstellt.

Das Fahrzeug 100 umfasst mehrere Komponenten, die über einen Datenbus 20 miteinander kommunizieren, nämlich ein Motorsteuergerät 10, eine Drosselklappen-Steuereinheit 30, eine Abgasturbolader-Steuereinheit 40, ein Getriebesteuergerät 50 und ein Kupplungssteuergerät 60. Das Fahrzeug 100 kann von einem Verbrennungsmotor angetrieben werden, wobei der Verbrennungsmotor ein Mehrzylinder-Ottomotor ist.

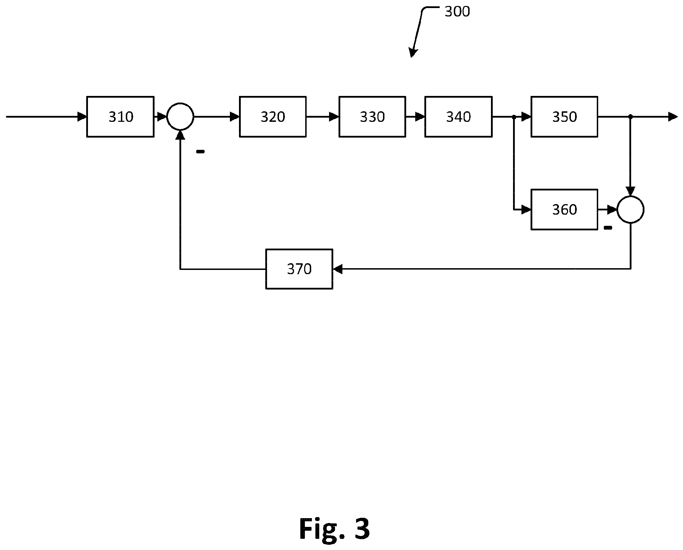

Ein Motorsteuergerät (ECU) 10 ist ein elektronisches Steuergerät, das eine Reihe von Aktoren des Verbrennungsmotors steuert, um eine optimale Motorleistung zu gewährleisten. Beispielsweise kann das Motorsteuergerät (ECU) 10 die Stellung einer Drosselklappe und/oder den Betrieb eines Abgasturboladers steuern. Die Steuerung der Drosselklappe und/oder des Abgasturboladers kann auf einer kontinuierlichen Regelung (Saugrohrdruckregelung, Ladedruckregelung) über den gesamten Betriebsbereich (Ansaugbereich, Überwegbereich (Druckausgleich), aufgeladener Betriebsbereich) des Verbrennungsmotors 4 basieren. Eine ausführlichere Erläuterung der Regelung ist in Fig. 3 unten zu finden.

Der Datenbus 20 kann beispielsweise gemäß Kommunikationstechnologien wie CAN (controller area network), LIN (local interconnect network), FlexRay, LAN/Ethernet oder MOST realisiert werden. Auch können im Fahrzeug mehrere unterschiedliche Bustypen in Kombination zum Einsatz kommen.

Die Drosselklappe-Steuereinheit 30 steuert die Drosselklappenstellung einer Drosselklappe. Wobei die Steuerung der Drosselklappen-Steuereinheit 30 auf der kontinuierlichen Regelung des Motorsteuergeräts (ECU) 10 basiert. Eine Drosselklappe ist im Ansaugtrakt des Verbrennungsmotors angeordnet. Die Drosselklappe reguliert die Luft- oder Gemischzufuhr des Verbrennungsmotors.

Die Abgasturbolader-Steuereinheit 40 steuert den Betrieb eines Abgasturboladers. Wobei die Steuerung des Abgasturboladers auf der Ladedruckregelung des Motorsteuergeräts (ECU) 10 basiert. Ein Abgasturbolader verdichtet die dem Verbrennungsmotor zugeführte Verbrennungsluft. Ein Abgasturbolader besteht aus einer Turbine und einem Verdichter. Ein Teil der Energie des Abgases des Verbrennungsmotors wird zum Antrieb der Turbine verwendet. Der Verdichter ist auf einer Turboladerwelle gegenüber der Turbine montiert. Der Verdichter saugt die Verbrennungsluft an und führt sie in verdichteter Form dem Verbrennungsmotor zu.

Das Getriebesteuergerät 50 wertet relevante Sensorsignale aus und setzt sie mithilfe des Motorsteuergeräts in Steuerbefehle für die Getriebesteller um. Das Getriebesteuergerät 20 kann ein Doppelkupplungsgetriebe sein, das mittels zweier Teilgetriebe einen vollautomatischen Gangwechsel ohne Zugkraftunterbrechung ermöglicht. Das Getriebesteuergerät 50 wählt die Gänge aufgrund von Steuersignalen des Motorsteuergerätes 10 oder nach Fahrerwunsch (Schaltwippen/Wählhebel).

Das Kupplungssteuergerät 60 ist ein Kupplungssystem für Fahrzeuggetriebe, bei dem das Öffnen (Entkuppeln) und Schließen der Trennkupplungen (Einkuppeln) durch Signale vom Motorsteuergerät (ECU) 10 ausgelöst wird.

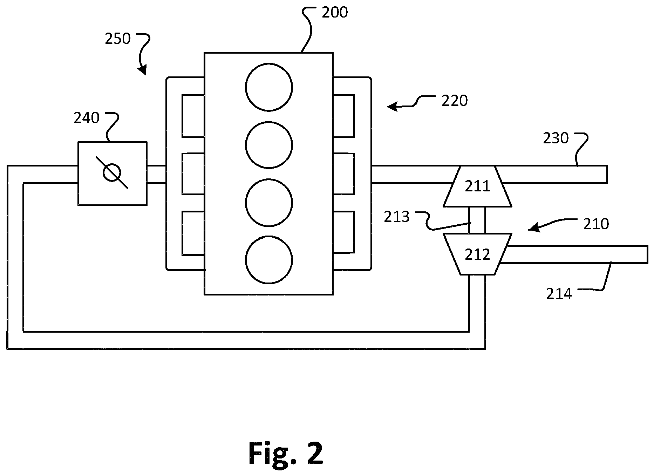

Fig. 2 zeigt ein Blockdiagramm, das schematisch die Konfiguration eines 4-Zylinder Verbrennungsmotors eines Fahrzeugs gemäß einem Ausführungsbeispiel der vorliegenden Erfindung darstellt.

Der Verbrennungsmotor 200 ist mit einem Abgasturbolader 210 gekoppelt, welcher eine Turbine 211 und einen Verdichter 212 umfasst, wobei die Turbine 211 und der Verdichter 212 auf einer gemeinsamen Welle 213, der sogenannten Turboladerwelle, angebracht sind.

Die Turbine 211 ist mit dem Verbrennungsmotor 200 durch einen Abgaskrümmer 220 verbunden. Die Turbine 211 erhält das Abgas des Verbrennungsmotors 200 über den Abgaskrümmer 220 und nutzt die im Abgas des Verbrennungsmotors 200 enthaltene Energie zum Antrieb des Verdichters 212. Der Verdichter 212 ist über ein Ansaugrohr 214 mit einem Luftfilter gekoppelt (in Fig. 1 nicht gezeigt). Der Verdichter 212 saugt die durch den Luftfilter gefilterte Frischluft an und drückt vorverdichtete Luft in die einzelnen Zylinder des Verbrennungsmotors 200. Ferner ist die Turbine 211 durch ein Abgasrohr 230 in Abgasströmungsrichtung mit einer Abgasanlage (in Fig. 1 nicht gezeigt) verbunden. Die Abgasanlage baut die Schadstoffe in den beim Betrieb des Verbrennungsmotors 200 entstehenden Abgasen ab und leitet die verbleibenden Abgase ab. Die Turboladerwelle 213 des Abgasturboladers 210 dreht sich mit zunehmender Motordrehzahl und Leistung aufgrund der antreibenden steigenden Abgasmengen immer schneller. Bei einer bestimmten Drehzahl erreicht der Verdichter 212 seine Fördergrenze, und es besteht auch die Gefahr, dass die mechanischen und thermischen Grenzen des Abgasturboladers 210 bzw. des Verbrennungsmotors 200 überschritten werden. Die bei niedrigen Drehzahlen gewünschte Aufladung des Verbrennungsmotors 200 kann bei höheren Drehzahlen problematisch werden. Um dies zu vermeiden, ist der Abgasturbolader 210 mit einer Ladedruckregelung ausgestattet, die es dem Lader ermöglicht, auch bei geringen Abgasströmen eine hohe Leistung zu erbringen und bei hohen Drehzahlen die Lastgrenze nicht zu überschreiten. Ein Drucksensor liefert den aktuellen Ist-Ladedruck an das Motorsteuergerät (10 in Fig. 1). Basierend auf dem aktuellen Ist-Ladedruck regelt das Motorsteuergerät (10 in Fig. 1) den Ladedruck. Die Ladedruckregelung hat die Aufgabe, die Differenz zwischen Soll- und Ist-Ladedruck schnellstmöglich auszugleichen. Zu diesem Zweck bewegt die Ladedruckregelung das vorhandene Stellglied (Wastegate oder verstellbare Leitschaufeln (variable Turbinengeometrie, VTG)) als Stellgröße. Die von dem Verdichter angesaugte und vorverdichtete Luft wird zu der Drosselklappe 240 zugeführt. Die Drosselklappe 240 regelt in Abhängigkeit vom Öffnungswinkel den Durchfluss von mehr oder weniger vorverdichteter Luft in den einzelnen Zylinder des Verbrennungsmotors 200. Der von der Drosselklappe 240 geregelte Durchfluss der vorverdichteten Luft wird zu den einzelnen Zylindern des Verbrennungsmotors 200 über ein Saugrohr 250 zugeführt. Das Saugrohr 250 umfasst einen Drucksensor (in Fig. 1 nicht gezeigt), der den aktuellen Ist-Ladedruck des Saugrohrdrucks misst. Die Drosselklappenstellung der Drosselklappe 240 wird durch eine kontinuierliche Regelung der Drosselklappenstellung im gesamten Betriebsbereich des Verbrennungsmotors 200 geregelt. Der Einsatzbereich erstreckt sich vom Saugbereich, über den Überwegbereich (Druckausgleich an der Drosselklappe) bis zum aufgeladenen Betriebsbereich des Verbrennungsmotors. Durch die kontinuierliche Regelung der Drosselklappenstellung im gesamten Betriebsbereich des Verbrennungsmotors 200 ist es möglich, den Saugrohrdruck auch im gesamten Betriebsbereich stationär genau einzustellen. Durch die stationäre Genauigkeit des Saugrohrdrucks ist zudem gewährleistet, dass die geforderte Sollfrischluftfüllung im Zylinder eingestellt wird. Ferner kann die kontinuierliche Regelung der Drosselklappenstellung auch bei aufgeladenen Verbrennungsmotoren mit verstellbaren Turbinen Geometrie (VTG) die Saugrohrdruckregelung unterstützen. In Phasen des Lastabbaus kann durch die kontinuierliche Regelung der Drosselklappenstellung die Lage der Drosselklappe unterstützend wirken und somit das Nachschieben verhindern.

Eine detaillierte Regelung der Drosselklappenstellung ist in Fig. 3 dargestellt.

Fig. 3 zeigt als ein Ausführungsbeispiel ein Regelungssystem für die Regelung der Drosselklappenstellung im Saug-, Überweg- und Ladebereich des Verbrennungsmotors.

Das Regelungssystem 300 zeigt einen geschlossenen Interne Modellkontrolle (IMC) Regelkreis. Ein IMC Regelkreis ist ein Prozess, der die Reaktion des Systems simuliert, um das Ergebnis einer Systemstörung abzuschätzen. Das Regelungssystem 300 umfasst drei Filtern 310, 330 und 370, eine modellbasierte Vorsteuerung 320, ein Begrenzungselement 340, einen Prozess 350 und ein Prozessmodell 360.

Die Filter 310, 330 und 370 können zum Beispiel Tiefpassfilter sein. Ein Tiefpassfilter (LPF) ist ein Filter, der Signale mit einer Frequenz unterhalb einer ausgewählten Grenzfrequenz durchlässt und Signale mit Frequenzen oberhalb der Grenzfrequenz dämpft. Der genaue Frequenzgang des Filters hängt vom Filterdesign ab. In einer Ausführung können die Filter 310, 330 und 370 $PT_1$-Glied oder $PT_2$-Glied sein. Ein $PT_1$-Glied ist ein lineares zeitinvariantes System (LZI)-Übertragungsglied, welches ein proportionales Übertragungsverhalten mit Verzögerung 1. Ordnung (Tiefpass) aufweist. Ein $PT_2$-Glied ist ein LZI-Übertragungsglied in der Regelungstechnik, das ein proportionales Übertragungsverhalten mit einer Verzögerung 2. Ordnung aufweist. Aufgrund seiner konjugierten komplexen Pole reagiert das $PT_2$- Glied auf eine Eingangssignaländerung mit einem oszillatorgedämpften Ausgangssignal.

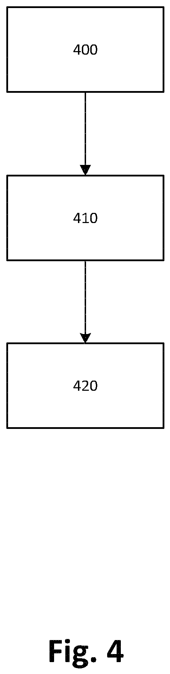

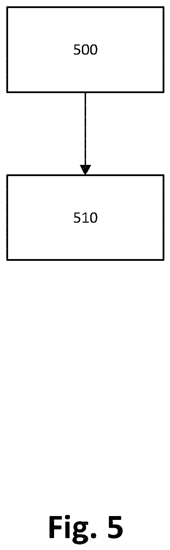

Den Eingang in das Regelungssystem bildet der Sollsaugrohrdruck $p_{SP}$. Dieser Sollsaugrohrdruck $p_{SP}$ zur Bildung der Zeitableitung und Beruhigung des Sollwertes wird mit dem $PT_1$-Glied 310 gefiltert. Von diesem zeitlich gefilterten Sollwert $p_{SP,f}$ wird zunächst die zeitlich gefilterte Differenz $\Delta p_f$ zwischen dem Prozess 350 und dem Prozessmodell 360 abgezogen, es entsteht der korrigierte Sollwert $p_{SPcor,f}$. Die modellbasierte Vorsteuerung 320 berechnet aus dem korrigiertem Sollwert $p_{SPcor,f}$ im Anschluss eine Sollfläche der Drosselklappe $A_{DK,soll}$. Dieser Sollwert $A_{DK,soll}$ wird durch das $PT_1$-Glied 330 stabilisiert und beruhigt. Mit dem $PT_1$-Glied 330 kann auch die Dynamik des Reglers eingestellt werden. Anschließend wird die zeitlich gefilterte Sollfläche der Drosselklappe $A_{DK,soll,f}$ durch ein Begrenzungselement 340 der physikalischen Stellergrenzen limitiert $A_{DK,lim}$ und gemäß dem IMC-Prinzip gleichzeitig dem Prozess 350 und dem Prozessmodell 360 zur Verfügung gestellt. Basierend auf der limitierten Sollfläche der Drosselklappe $A_{DK,lim}$ wird die Drosselklappe verstellt. Der durch die Drosselklappenstellung resultierende Saugrohrdruck p wird durch einen Drucksensor gemessen. Der gemessene Saugrohrdruck $p$ und der modellierte Saugrohrdruck $\hat{p}$ können aufgrund von Rauschen, das entweder durch interne (z.B. Körpersensoren sind nicht perfekt, sensorisches Rauschen) oder externe (z.B. unvorhersehbare Kräfte von außerhalb des Körpers) Quellen in das System eingebracht wird, voneinander abweichen. Die Differenz $\Delta p$ des gemessenen Saugrohrdrucks p und des modellierten Saugrohrdrucks $\hat{p}$ wird zur Formung der Dynamik und Unterdrückung vom Messrauschen mit dem $PT_1$-Glied 370 gefiltert und zurückgeführt. Somit ist der Regelkreis geschlossen. Ein detaillierter Verfahrensansatz der modellbasierten Vorsteuerung 320 ist in Fig. 4 dargestellt und ein detaillierter Verfahrensansatz des Prozessmodells 360 ist in Fig. 5 dargestellt.

Fig. 4 zeigt als ein Ausführungsbeispiel einen Verfahrensansatz der modellbasierten Vorsteuerung des Regelungssystems.

In Schritt 400 erhält die modellbasierte Vorsteuerung den korrigierten Sollwert $p_{SPcor,f}$ und den zeitabgeleiteten Sollwert $\dot{p}_{SPcor,f}$.

In Schritt 410 wird auf der Grundlage der erhaltenen Sollwerte $p_{SPcor,f}$ und $\dot{p}_{SPcor,f}$ die Sollfläche der Drosselklappe (effektive Querschnitts-Fläche der Drosselklappe) $A_{DK,soll}$ berechnet. Die Sollfläche der Drosselklappe $A_{DK,soll}$ wird wie folgt berechnet:

$$A_{DK,soll} = \frac{\frac{V}{KRT_2}\dot{p}_{SPcor,f} + w_{vlv}(p) - w_{TEV}}{p_1\sqrt{\frac{2}{RT_1}}\Psi(p)} - A_{DK,leak} \qquad \text{(Gl. 1)},$$

wobei gilt: $V$ ist das Volumen des Saugrohres, $R$ ist die spezifische Gaskonstante von Luft, $K$ ist der Isentropenexponent, $p$ ist der Luftdruck im Saugrohr, $T_2$ ist die Temperatur der Luft im Saugrohr, $w_{vlv}(p)$ ist der abfließende Luftmassenstrom in Abhängigkeit des Luftdrucks $p$, der über die Einlassventile aus dem Saugrohr ausströmt, $w_{TEV}$ ist der zufließende Luftmassenstrom, der über das Tankentlüftungsventil ins Saugrohr einströmt, $p_1$ ist der Luftdruck, der stromauf der Drosselklappe anliegt, $T_1$ ist die Temperatur der Luft, die über die Drosselklappe ins Saugrohr einströmt, $\Psi(p)$ ist die Durchflussfunktion in Abhängigkeit des Luftdrucks $p$ und $A_{DK,leak}$ ist die effektive Leckage-Fläche der Drosselklappe. Die effektive Leckage-Fläche der Drosselklappe $A_{DK,leak}$ kann sich infolge eines nicht vollständigen Schließens der Drosselklappe ergeben.

Die effektive Leckage-Fläche der Drosselklappe $A_{DK,leak}$, die Temperatur $T_1$ der Luft, die über die Drosselklappe ins Saugrohr einströmt, und die Temperatur $T_2$ der Luft im Saugrohr können über ein Referenzkennfeld ermittelt werden. Das Referenzkennfeld kann mittels Massenstromsowie Ladedruckvariation in einer Normalbetriebsart am Prüfstand ermittelt werden. Alternativ können die Temperaturen $T_1$ und $T_2$ durch Sensoren gemessen werden.

In Schritt 420 wird die berechnete Sollfläche der Drosselklappe $A_{DK,soll}$ an das $PT_1$-Glied (330 in Fig. 3) übermittelt.

Fig. 5 zeigt als ein Ausführungsbeispiel einen Verfahrensansatz des Prozessmodells des Regelungssystems.

In Schritt 500 erhält das Prozessmodell den limitierten Sollfläche der Drosselklappe $A_{DK,lim}$.

In Schritt 510 wird auf der Grundlage der erhaltenen limitierten Sollfläche der Drosselklappe $A_{DK,lim}$ die modellierte Saugrohrdruck $\hat{p}$ berechnet. Die modellierte Saugrohrdruck $\hat{p}$ wird wie folgt berechnet:

$$\hat{p} = \int (\dot{p}) dt \qquad\qquad \text{(Gl. 2)},$$

wobei

$$\frac{V}{KRT_2}(\dot{p}) = \sum W_G = W_{thr} - W_{vlv} + W_{TEV}$$

$$= p_1 \sqrt{\frac{2}{RT_1}} \left( A_{DK,lim} + A_{DK,leak} \right) \Psi(p) - w_{vlv}(p) + w_{TEV} \qquad\qquad \text{(Gl. 3)}$$

ist.

Dabei gilt: $W_G$ ist der Luftmassenstrom im Saugrohr, $Wt_{hr}$ ist der zufließende Luftmassenstrom, der über die Drosselklappe ins Saugrohr einströmt, $p_1$ ist der Luftdruck stromauf der Drosselklappe (Ladedruck), $V$ ist das Volumen des Saugrohres, $R$ ist die spezifische Gaskonstante von Luft, $K$ ist der Isentropenexponent, $p$ ist der Luftdruck im Saugrohr, $T_2$ ist die Temperatur der Luft im Saugrohr, $w_{vlv}(p)$ ist der abfließende Luftmassenstrom in Abhängigkeit des Luftdrucks $p$, der über die Einlassventile aus dem Saugrohr ausströmt, $w_{TEV}$ ist der zufließende Luftmassenstrom, der über das Tankentlüftungsventil ins Saugrohr einströmt, $T_1$ ist die Temperatur der Luft, die über die Drosselklappe ins Saugrohr einströmt, $\Psi(p)$ ist die Durchflussfunktion in Abhängigkeit des Luftdrucks $p$ und $A_{DK,leak}$ ist die effektive Leckage-Fläche der Drosselklappe.

Die effektive Leckage-Fläche der Drosselklappe $A_{DK,leak}$, die Temperatur $T_1$ der Luft, die über die Drosselklappe ins Saugrohr einströmt, und die Temperatur $T_2$ der Luft im Saugrohr können über ein Referenzkennfeld ermittelt werden. Das Referenzkennfeld kann mittels Massenstromsowie Ladedruckvariation in einer Normalbetriebsart am Prüfstand ermittelt werden. Alternativ können die Temperaturen $T_1$ und $T_2$ durch Sensoren gemessen werden.

**Bezugszeichenliste**

| | |
|---|---|
| 10 | Motorsteuergerät |
| 20 | Datenbus |
| 30 | Drosselklappen-Steuereinheit |
| 40 | Abgasturbolader-Steuereinheit |
| 50 | Getriebesteuergerät |
| 60 | Kupplungssteuergerät |
| 100 | Fahrzeug |
| 200 | Verbrennungsmotor |
| 210 | Abgasturbolader |
| 211 | Turbine |
| 212 | Verdichter |
| 213 | Turboladerwelle |
| 214 | Ansaugrohr |
| 220 | Abgaskrümmer |
| 230 | Abgasrohr |
| 240 | Drosselklappe |
| 250 | Saugrohr |
| 300 | Regelungssystem |
| 310 | Filter |
| 320 | modellbasierte Vorsteuerung |
| 330 | Filter |
| 340 | Begrenzungselement |
| 350 | Prozess |
| 360 | Prozessmodell |

370    Filter

**Patentansprüche**

1.  Verfahren zum Einstellen einer Drosselklappe (240), umfassend:

    Regeln (300) einer Drosselklappenstellung der Drosselklappe (240) im gesamten Betriebsbereich eines Verbrennungsmotors (200), wobei das Regeln (300) auf einem Interne Modellkontrolle (IMC)-Prinzip basiert,

    wobei das Regeln (300) umfasst
    Empfangen eines Sollsaugrohrdrucks ($p_{SP}$) als Eingangsgröße; und

    Berechnen (320) einer Sollfläche der Drosselklappe ($A_{DK,soll}$) basierend auf dem Sollsaugrohrdruck ($p_{SP}$), wobei das Regeln (300) ferner den Sollsaugrohrdruck ($p_{SP}$) mittels eines Filters (310) filtert.

2.  Verfahren nach Anspruch 1, wobei der gesamte Betriebsbereich des Verbrennungsmotors (200) einen Ansaugbereich, einen Überwegbereich des Druckausgleichs, der vor, an und nach der Drosselklappe ist und einen aufgeladenen Betriebsbereich des Verbrennungsmotors (200) umfasst.

3.  Verfahren nach Anspruch 2, wobei die Sollfläche der Drosselklappe ($A_{DK,soll}$) gemäß dem IMC-Prinzip gleichzeitig einem Prozess (350) und einem Prozessmodell (360) zur Verfügung gestellt wird.

4.  Verfahren nach Anspruch 3, wobei die berechnete Sollfläche ($A_{DK,soll}$) eine durch physikalische Stellergrenzen limitierte Sollfläche ($A_{DK,lim}$) ist.

5.  Verfahren nach Anspruch 3 oder Anspruch 4, wobei
    der Prozess (350) die Stellung der Drosselklappe (240) basierend auf der berechneten Sollfläche ($A_{DK,soll}$) bestimmt und den dadurch erzeugten Saugrohrdruck ($p$) misst; und das Prozessmodell (360) einen modellierten Saugrohrdruck ($\hat{p}$) basierend auf der berechneten Sollfläche ($A_{DK,soll}$) bestimmt.

6.  Verfahren nach Anspruch 5, wobei das Regeln (300) ferner umfasst:

    Ermitteln einer Differenz ($\Delta p$) des gemessenen Saugrohrdrucks ($p$) und des modellierten Saugrohrdrucks ($\hat{p}$); und
    Ermitteln eines korrigierten Sollsaugrohrdrucks ($p_{SPcor,f}$) basierend auf der ermittelten Differenz ($\Delta p$).

7.  Verfahren nach einem der Ansprüche 1 bis 6, wobei die Sollfläche der Drosselklappe ($A_{DK,soll}$) wie folgt berechnet wird:

$$A_{DK,soll} = \frac{\frac{V}{KRT_2}\dot{p}_{SPcor,f}+w_{vlv}(p)-w_{TEV}}{p_1\sqrt{\frac{2}{RT_1}}\Psi(p)} - A_{DK,leak} \qquad \text{(Gl. 1)},$$

    wobei gilt: $V$ ist das Volumen des Saugrohres, $R$ ist die spezifische Gaskonstante von Luft , $K$ ist der Isentropenexponent , $p$ ist der Luftdruck im Saugrohr, $T_2$ ist die Temperatur der Luft im Saugrohr, $w_{vlv}(p)$ ist der abfließende Luftmassenstrom in Abhängigkeit des Luftdrucks $p$, der über die Einlassventile aus dem Saugrohr ausströmt, $w_{TEV}$ ist der zufließende Luftmassenstrom, der über das Tankentlüftungsventil ins Saugrohr einströmt, $p_1$ ist der Luftdruck, der stromauf der Drosselklappe anliegt, $T_1$ ist die Temperatur der Luft, die über die Drosselklappe ins Saugrohr einströmt, $\Psi(p)$ ist die Durchflussfunktion in Abhängigkeit des Luftdrucks $p$ und $A_{DK,leak}$ ist die effektive Leckage-Fläche der Drosselklappe.

8.  Verfahren nach einem der Ansprüche 5 oder 6, wobei der modellierte Saugrohrdruck ($\hat{p}$) wie folgt berechnet wird:

$$\hat{p} = \int (\dot{\hat{p}})dt \qquad \text{(Gl. 2)},$$

    wobei

$$\frac{V}{KRT_2}(\dot{p}) = \sum W_G = W_{thr} - W_{vlv} + W_{TEV}$$

$$= p_1\sqrt{\frac{2}{RT_1}}\left(A_{DK,lim} + A_{DK,leak}\right)\Psi(p) - w_{vlv}(p) + w_{TEV} \qquad \text{(Gl. 3)}$$

ist,

**und** wobei gilt: $W_G$ ist der Luftmassenstrom im Saugrohr, $W_{thr}$ ist der zufließende Luftmassenstrom, der über die Drosselklappe ins Saugrohr einströmt, $p_1$ ist der Luftdruck stromauf der Drosselklappe (Ladedruck), $V$ ist das Volumen des Saugrohres, $R$ ist die spezifische Gaskonstante von Luft, $K$ ist der Isentropenexponent, $p$ ist der Luftdruck im Saugrohr, $T_2$ ist die Temperatur der Luft im Saugrohr, $w_{vlv}(p)$ ist der abfließende Luftmassenstrom in Abhängigkeit des Luftdrucks $p$, der über die Einlassventile aus dem Saugrohr ausströmt, $w_{TEV}$ ist der zufließende Luftmassenstrom, der über das Tankentlüftungsventil ins Saugrohr einströmt, $T_1$ ist die Temperatur der Luft, die über die Drosselklappe ins Saugrohr einströmt, $\Psi(p)$ ist die Durchflussfunktion in Abhängigkeit des Luftdrucks $p$, $A_{DK,leak}$ ist die effektive Leckage-Fläche der Drosselklappe und $A_{DK,lim}$ ist die limitierte Sollfläche der Drosselklappe.

9.  Verfahren nach einem der vorherigen Ansprüche, wobei das Regeln (300) ferner die Sollfläche der Drosselklappe ($A_{DK,soll}$) mittels eines Filters (330) filtert.

10. Verfahren nach einem der Ansprüche 6 oder 8, wobei das Regeln (300) ferner die ermittelte Differenz ($\Delta$p) mittels eines Filters (370) filtert.

11. Verfahren nach einem der vorherigen Ansprüche, wobei im aufgeladenen Betriebsbereich des Verbrennungsmotors (200) das Regeln (300) der Drosselklappenstellung der Drosselklappe (240) durch eine verstellbare Turbingeometrie (VTG) unterstützt wird.

12. Motorsteuergerät (10), welches dazu eingerichtet ist, ein Verfahren nach einem der Ansprüche 1 bis 11 durchzuführen.

13. Fahrzeug (100) mit einem Motorsteuergerät (10) nach Anspruch 12.

**Claims**

1.  Method for adjusting a throttle valve (240), comprising:

    controlling (300), by means of closed-loop control, a throttle valve position of the throttle valve (240) over the entire operating region of an internal combustion engine (200), wherein the closed-loop control step (300) is based on an internal model control (IMC) principle,
    wherein the closed-loop control step (300) comprises
    receiving a target intake manifold pressure ($p_{SP}$) as an input variable; and
    calculating (320) a target area for the throttle valve ($A_{DK,target}$) on the basis of the target intake manifold pressure ($p_{SP}$),
    wherein the closed-loop control step (300) further filters the target intake manifold pressure ($p_{SP}$) by means of a filter (310).

2.  Method according to claim 1, wherein the entire operating region of the internal combustion engine (200) comprises an intake region, a transition region for pressure equalization, upstream, at and downstream of the throttle valve, and a turbocharged operating region of the internal combustion engine (200).

3.  Method according to claim 2, wherein the target area of the throttle valve ($A_{DK,target}$) is simultaneously provided, in accordance with the IMC principle, to a process (350) and a process model (360).

4.  Method according to claim 3, wherein the calculated target area ($A_{DK,target}$) is a target area ($A_{DK,lim}$) limited by physical adjuster limits.

5.  Method according to claim 3 or claim 4, wherein

the process (350) determines the position of the throttle valve (240) on the basis of the calculated target area ($A_{DK,target}$) and measures the resulting intake manifold pressure ($p$); and
the process model (360) determines a modeled intake manifold pressure ($\hat{p}$) on the basis of the calculated target area ($A_{DK,target}$).

6. Method according to claim 5, wherein the closed-loop control step (300) further comprises:

   ascertaining a difference ($\Delta p$) between the measured intake manifold pressure ($p$) and the modeled intake manifold pressure ($\hat{p}$); and
   ascertaining a corrected target intake manifold pressure ($p_{SPcor,f}$) on the basis of the ascertained difference ($\Delta p$).

7. Method according to any of claims 1 to 6, wherein the target area of the throttle valve ($A_{DK,target}$) is calculated as follows:

$$A_{DK,target} = \frac{\frac{V}{KRT_2}\dot{p}_{SPcor,f} + w_{vlv}(p) - w_{TEV}}{p_1\sqrt{\frac{2}{RT_1}}\Psi(p)} - A_{DK,leak}$$

(Eq. 1),

where: $V$ is the volume of the intake manifold, $R$ is the specific gas constant of air, $K$ is the isentropic exponent, $p$ is the air pressure in the intake manifold, $T_2$ is the temperature of the air in the intake manifold, $w_{vlv}(p)$ is the outflowing air mass flow that flows out of the intake manifold via the intake valves, as a function of the air pressure $p$, $w_{TEV}$ is the inflowing air mass flow that flows into the intake manifold via the tank vent valve, $p_1$ is the air pressure present upstream of the throttle valve, $T_1$ is the temperature of the air that flows into the intake manifold via the throttle valve, $\Psi(p)$ is the flow function as a function of the air pressure $p$, and $A_{DK,leak}$ is the effective leakage area of the throttle valve.

8. Method according to either of claims 5 and 6, wherein the modeled intake manifold pressure ($\hat{p}$) is calculated as follows:

$$\hat{p} = \int(\dot{\hat{p}})dt$$

(Eq. 2),

where

$$\frac{V}{KRT_2}(\dot{\hat{p}}) = \sum W_G = W_{thr} - W_{vlv} + W_{TEV}$$

$$= p_1\sqrt{\frac{2}{RT_1}}\left(A_{DK,lim} + A_{DK,leak}\right)\Psi(p) - w_{vlv}(p) + w_{TEV}$$

(Eq. 3),

and where: $W_G$ is the air mass flow in the intake manifold, $Wt_{hr}$ is the inflowing air mass flow that flows into the intake manifold via the throttle valve, $p_1$ is the air pressure upstream of the throttle valve (boost pressure), $V$ is the volume of the intake manifold, $R$ is the specific gas constant of air, $K$ is the isentropic exponent, $p$ is the air pressure in the intake manifold, $T_2$ is the temperature of the air in the intake manifold, $w_{vlv}(p)$ is the outflowing air mass flow that flows out of the intake manifold via the intake valves, as a function of the air pressure $p$, $w_{TEV}$ is the inflowing air mass flow that flows into the intake manifold via the tank vent valve, $T_1$ is the temperature of the air that flows into the intake manifold via the throttle valve, $\Psi(p)$ is the flow function as a function of the air pressure $p$, $A_{DK,leak}$ is the effective leakage area of the throttle valve and $A_{DK,lim}$ is the limited target area of the throttle valve.

9. Method according to any of the preceding claims, wherein the closed-loop control step (300) further filters the target area of the throttle valve ($A_{DK,target}$) by means of a filter (330).

10. Method according to either of claims 6 and 8, wherein the closed-loop control step (300) further filters the ascertained difference ($\Delta p$) by means of a filter (370).

11. Method according to any of the preceding claims, wherein in the turbocharged operating region of the internal combustion engine (200) the step of controlling (300), by means of closed-loop control, the throttle valve position of the throttle valve (240) is supported by an adjustable turbine geometry (VTG).

12. Engine control unit (10) which is configured to carry out a method according to any of claims 1 to 11.

13. Vehicle (100) comprising an engine control unit (10) according to claim 12.

**Revendications**

1. Procédé permettant d'adapter un papillon des gaz (240), comprenant :

   le réglage (300) d'une position du papillon des gaz (240) dans toute la plage de fonctionnement d'un moteur à combustion interne (200), dans lequel le réglage (300) est basé sur un principe de commande à modèle interne (IMC),
   dans lequel le réglage (300) comprend
   la réception d'une pression de collecteur d'admission de consigne ($p_{SP}$) comme grandeur d'entrée ; et
   le calcul (320) d'une surface de consigne du papillon des gaz ($A_{DK,consigne}$) sur la base de la pression de collecteur d'admission de consigne ($p_{SP}$),
   dans lequel le réglage (300) filtre en outre la pression de collecteur d'admission de consigne ($p_{SP}$) au moyen d'un filtre (310).

2. Procédé selon la revendication 1, dans lequel toute la plage de fonctionnement du moteur à combustion interne (200) comprend une plage d'admission, une plage de transfert d'équilibrage de pression en amont, au niveau et en aval du papillon des gaz, et une plage de fonctionnement suralimentée du moteur à combustion interne (200).

3. Procédé selon la revendication 2, dans lequel la surface de consigne du papillon des gaz ($A_{DK,consigne}$) est simultanément mise à la disposition d'un processus (350) et d'un modèle de processus (360), conformément au principe IMC.

4. Procédé selon la revendication 3, dans lequel la surface de consigne ($A_{DK,consigne}$) calculée est une surface de consigne limitée par des limites d'actionneur physiques ($A_{DK,lim}$).

5. Procédé selon la revendication 3 ou 4, dans lequel

   le processus (350) détermine la position du papillon des gaz (240) sur la base de la surface de consigne ($A_{DK,consigne}$) calculée et mesure la pression de collecteur d'admission ($p$) ainsi générée ; et
   le modèle de processus (360) détermine une pression de collecteur d'admission modélisée ($\hat{p}$) sur la base de la surface de consigne ($A_{DK,consigne}$) calculée.

6. Procédé selon la revendication 5, dans lequel le réglage (300) comprend en outre :

   l'établissement d'une différence ($\Delta p$) entre la pression de collecteur d'admission ($p$) mesurée et la pression de collecteur d'admission modélisée ($\hat{p}$) ; et
   l'établissement d'une pression de collecteur d'admission de consigne corrigée ($P_{SPcor,f}$) sur la base de la différence ($\Delta p$) établie.

7. Procédé selon l'une des revendications 1 à 6, dans lequel la surface de consigne du papillon des gaz ($A_{DK,consigne}$) est calculée comme suit :

$$A_{DK,consigne} = \frac{\frac{V}{KRT_2}\dot{p}_{SPcor,f} + w_{vlv}(p) - w_{TEV}}{p_1\sqrt{\frac{2}{RT_1}}\Psi(p)} - A_{DK,fuite} \qquad \text{(Gl. 1),}$$

où : V est le volume du collecteur d'admission, $R$ est la constante des gaz spécifique de l'air, $K$ est l'exposant isentropique, $p$ est la pression d'air dans le collecteur d'admission, $T_2$ est la température de l'air dans le collecteur d'admission, $w_{vlv}(p)$ est le débit massique d'air sortant en fonction de la pression d'air $p$ qui s'échappe du collecteur d'admission par l'intermédiaire des soupapes d'admission, $w_{TEv}$ est le débit massique d'air entrant qui pénètre dans le collecteur d'admission par l'intermédiaire de la soupape d'aération de réservoir, $p_1$ est la pression d'air présente en amont du papillon des gaz, $T_1$ est la température de l'air qui pénètre dans le collecteur d'admission par l'intermédiaire du papillon des gaz, $\Psi(p)$ est la fonction de débit en fonction de la pression d'air $p$ et $A_{DK,fuite}$ est la surface de fuite effective du papillon des gaz.

8. Procédé selon l'une des revendications 5 ou 6, dans lequel la pression de collecteur d'admission modélisée ($\hat{p}$) est calculée comme suit :

$$\hat{p} = \int (\dot{\hat{p}})dt \qquad \text{(Gl. 2)},$$

où

$$\frac{V}{KRT_2}(\dot{\hat{p}}) = \sum W_G = W_{thr} - W_{vlv} + W_{TEV}$$

$$= p_1 \sqrt{\frac{2}{RT_1}}(A_{DK,lim} + A_{DK,fuite})\Psi(p) - w_{vlv}(p) + w_{TEV} \qquad \text{est (Gl. 3)},$$

et où : $W_G$ est le débit massique d'air dans le collecteur d'admission, $W_{thr}$ est le débit massique d'air entrant qui pénètre dans le collecteur d'admission par l'intermédiaire du papillon des gaz, $p_1$ est la pression d'air en amont du papillon des gaz (pression de suralimentation), $V$ est le volume du collecteur d'admission, $R$ est la constante des gaz spécifique de l'air, $K$ est l'exposant isentropique, $p$ est la pression d'air dans le collecteur d'admission, $T_2$ est la température de l'air dans le collecteur d'admission, $w_{vlv}(p)$ est le débit massique d'air sortant en fonction de la pression d'air $p$ qui s'échappe du collecteur d'admission par l'intermédiaire des soupapes d'admission, $w_{TEv}$ est le débit massique d'air entrant qui pénètre dans le collecteur d'admission par l'intermédiaire de la soupape d'aération de réservoir, $T_1$ est la température de l'air qui pénètre dans le collecteur d'admission par l'intermédiaire du papillon des gaz, $\Psi(p)$ est la fonction de débit en fonction de la pression d'air $p$, $A_{DK,fuite}$ est la surface de fuite effective du papillon des gaz et $A_{DK,lim}$ est la surface de consigne limitée du papillon des gaz.

9. Procédé selon l'une des revendications précédentes, dans lequel le réglage (300) filtre en outre la surface de consigne du papillon des gaz ($A_{DK,consigne}$) au moyen d'un filtre (330).

10. Procédé selon l'une des revendications 6 ou 8, dans lequel le réglage (300) filtre en outre la différence ($\Delta p$) déterminée au moyen d'un filtre (370).

11. Procédé selon l'une des revendications précédentes, dans lequel, dans la plage de fonctionnement suralimentée du moteur à combustion interne (200), le réglage (300) de la position du papillon des gaz (240) est assistée par une turbine à géométrie variable (VTG).

12. Appareil de commande de moteur (10), lequel est configuré pour exécuter un procédé selon l'une des revendications 1 à 11.

13. Véhicule (100) comportant un appareil de commande de moteur (10) selon la revendication 12.

100

10 | 30 | 40 | 50 | 60

20

**Fig. 1**

**Fig. 2**

Fig. 3

**Fig. 4**

500

510

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7805939 B2
- US 9567924 B2
- US 9797299 B2
- DE 102018120975 A1
- DE 102007060216 A1

**In der Beschreibung aufgeführte Nicht-Patentliteratur**

- **GUILLAUME COLIN et al.** *Neural Control of Fast Nonlinear Systems- Application to a Turbocharged SI Engine With VCT*
- **HILSCH MICHAEL et al.** *Internal Model Control of Nonlinear Systems with Input Saturation*